# EUROPÄISCHE PATENTSCHRIFT

(11) **EP 3 529 194 B1**
(45) Veröffentlichungstag und Bekanntmachung des Hinweises auf die Patenterteilung: **07.08.2024**
(21) Anmeldenummer: 17787372.6
(22) Anmeldetag: 12.10.2017
(51) Int. Cl.: B66C 19/00, B66C 13/18, B66C 13/22, B66C 13/40, G05D 1/00

(54) **ANORDNUNG EINES PORTALHUBGERÄTS UND EINER REIHE VON BEABSTANDETEN MARKIERUNGSELEMENTEN**
ARRANGEMENT OF A PORTAL LIFTING DEVICE AND A SERIES OF SPACED-APPART MARKING ELEMENTS
ARRANGEMENT D'UN PORTAIL DE LEVAGE ET D'UNE SÉRIE D'ÉLÉMENTS DE MARQUAGE ESPACÉS

(30) Priorität: 18.10.2016 DE 102016119793
(43) Veröffentlichungstag der Anmeldung: 28.08.2019
(73) Patentinhaber: Konecranes Global Corporation, 05830 Hyvinkää (FI)
(72) Erfinder: WIESCHEMANN, Armin, 46119 Oberhausen (DE); SCHULZ, Heiko, 51381 Leverkusen (DE); SCHMIDT-EWIG, Jan, 45239 Essen (DE); ALDEJOHANN, Stefan, 40764 Langenfeld (DE); EICHNER, Heinz, 40878 Ratingen (DE); AHMADIAN, Mohammad, 41468 Neuss (DE)
(74) Vertreter: Moser Götze & Partner Patentanwälte mbB
(86) Internationale Anmeldenummer: PCT/EP2017/076099
(87) Internationale Veröffentlichungsnummer: WO 2018/073097

(56) Entgegenhaltungen:
- DE-B3- 102014 100 833
- JP-A- 2000 153 988
- JP-A- 2001 163 575
- JP-A- 2003 192 268
- JP-A- H07 144 878
- JP-A- H10 105 235

## Beschreibung

Die Erfindung betrifft eine Anordnung gemäß dem Oberbegriff von Anspruch 1.

Portalhubgeräte, die auch Portalhubwagen, Portalhubstapelwagen, Portalstapelwagen, Straddle Carrier, Van Carrier, Shuttle Carrier, Sprinter Carrier oder Runner genannt werden, sind allgemein bekannt. Hierbei handelt es sich um spezielle Umschlaggeräte für genormte ISO-Container in Terminals, insbesondere Hafenterminals oder Terminals für den kombinierten Verkehr zwischen Straße und Schiene. Mit Hilfe einer Hubvorrichtung und einem als Spreader bezeichneten Lastaufnahmemittel können Portalhubgeräte Container anheben und nach einem Transport an einem Zielort abstellen. Da die flurgebundenen und mit einer Gummibereifung versehenen Portalhubgeräte einen spinnenbeinartigen Aufbau mit vier in den Ecken eines gedachten Rechtecks angeordneten Portalstützen aufweisen, können diese einen auf dem Boden oder auf einem anderen Container ruhenden Container überfahren und hierbei zusätzlich je nach Bauweise auch einen angehobenen Container transportieren. Je nach Bauhöhe werden die Portalhubgeräte beispielsweise als 1 über 3-Geräte, 1 über 2- Geräte usw. bezeichnet. Ein 1 über 3-Gerät kann einen Container auf 3 übereinander gestapelte Container absetzen, den obersten von 4 übereinander gestapelten Containern aufnehmen oder 3 übereinander gestapelte Container mit einem aufgenommenen Container überfahren. In diesem Zusammenhang werden unter ISO-Containern genormte Großraumbeziehungsweise Seefrachtcontainer verstanden, die im internationalen Warenverkehr zum Einsatz kommen. Am weitesten verbreitet sind ISO-Container mit einer Breite von 8 Fuß und einer Länge von 20, 40 oder 45 Fuß. Das Portalhubgerät ist nicht schienengebunden und somit frei verfahrbar und wird gewöhnlich dieselelektrisch, dieselhydraulisch oder vollelektrisch angetrieben.

Auch sind Portalhubgeräte bekannt, die automatisch nach dem Prinzip der sogenannten Rasternavigation geführt werden können. Hierbei sind in dem Boden, auf dem die Portalhubgeräte verfahren, Markierungselemente eingelassen, die von der Sensorvorrichtung detektiert und ausgelesen werden. Zumeist handelt es sich bei den Markierungselementen um passive Transponder oder Magnete. Wenn die Markierungselemente als Transponder ausgebildet sind, ist auch die Bezeichnung Transpondernavigation üblich. Die Markierungselemente sind im gesamten Hafen- und Terminalgelände im Bereich der Fahrstrecken flächig verteilt. Die Rasternavigation wird auch als FROG-Verfahren (Free Ranging On Grid) bezeichnet. Das FROG-Verfahren ist in Bezug auf fahrerlose, flurgebundene und gummibereifte Transportfahrzeuge in der deutschen Offenlegungsschrift DE 10 2006 044 645 A1 näher beschrieben. Um das Transportfahrzeug entlang der Markierungselemente zu navigieren, ist an dem Transportfahrzeug eine Sensorvorrichtung angeordnet, die Antennen und/oder Magnetfeldsensoren umfassen können. Mittels der Sensorvorrichtung werden beim Überfahren die in der Fahrbahn eingelassenen Markierungselemente erkannt und als Information die Koordinaten des jeweiligen Markierungselements ausgelesen. Das Auslesen kann auch ein Decodieren der Informationen erfassen, sofern diese in den Markierungselementen in codierter Form gespeichert beziehungsweise zum Auslesen zur Verfügung gestellt sind. Hierfür weisen Sensorvorrichtungen der Transportfahrzeuge flache breite Teile mit Sensoren auf, die vorne und hinten an dem Transportfahrzeug dicht über dem Boden parallel zu diesem befestigt sind. Die Teile der Sensorvorrichtung erstrecken sich quer zur Fahrtrichtung über die gesamte Fahrzeugbreite des Transportfahrzeuges, so dass die Sensorvorrichtung insgesamt jeweils mehr als ein Markierungselement gleichzeitig erfasst. Die über die Sensorvorrichtung aus den Markierungselementen ausgelesenen Informationen werden dann zur Navigation des Fahrzeuges verwendet. Da die Markierungselemente in einem festgelegten Raster in den Boden eingelassen sind, wird dieses Navigationsverfahren als Rasternavigation bezeichnet.

Aus der deutschen Patentschrift DE 10 2014 100 833 B3 ist eine Anordnung gemäß dem Oberbegriff von Anspruch 1 bekannt. Die Anordnung umfasst ein mittels Rasternavigation automatisch gesteuertes Portalhubgerät zum Umschlag von Containern. Die als Sensoren dienenden Antennen der Sensorvorrichtung sind an den Fahrwerkträgern des Portalhubgeräts befestigt und müssen zur Navigation des Portalhubgeräts zwischen die Fahrwerkträger in das Lichtraumprofil unterhalb des Portalhubgeräts hinein geschwenkt werden, um in dieser Betriebsstellung zwischen den Fahrwerkträgern unterhalb des Lichtraumprofils angeordnete Markierungselemente auslesen zu können. Die Antennen der Sensorvorrichtung können auch in eine Ruhestellung unterhalb der Fahrwerkträger des Portalhubgeräts geschwenkt werden. Hierbei erfolgt allerdings keine Rasternavigation des Portalhubgeräts. In der Betriebsstellung ist hingegen kein Ladebetrieb möglich, bei dem ein Container aufgenommen oder abgesetzt werden kann. Dies liegt daran, dass die Sensorvorrichtung in der Betriebsstellung zwischen den Fahrwerkträgern in das Lichtraumprofil hineinragt und die gesamte Breite des Portalhubgeräts überdeckt.

Aus der DE 10 2011 001 847 A1 ist ein Portalhubgerät mit Sensoren zur automatisch geführten Navigation des Portalhubgeräts bekannt. Die Sensoren sind unterhalb von Fahrwerksträgern des Portalhubgeräts angeordnet. Außerdem können als Markierungselemente dienende Transponder in einen Flurboden eingelassen sein. Zur Anordnung des Portalhubgeräts und dessen Sensoren relativ zu den Transpondern ist in diesem Dokument nichts offenbart.

Aus der JPH10105235A, JP2000153988A, JPH07144878A, JP2003192268A und der JP2001163575A sind jeweils Rubber Tire Gantry Cranes bekannt, die geradlinig entlang von in den Boden eingelassenen Markierungselementen verfahren werden können.

Hiervon ausgehend liegt der Erfindung die Aufgabe zugrunde, eine verbesserte gattungsgemäße Anordnung mit einem Portalhubgerät in Form eines Straddle Carriers und mit einer Reihe von beabstandeten Markierungselementen zur Rasternavigation zu schaffen.

Diese Aufgabe wird mit einer Anordnung mit den Merkmalen des Anspruches 1 gelöst. Vorteilhafte Ausgestaltungen der Erfindung sind in den abhängigen Ansprüchen und der nachfolgenden Beschreibung angegeben.

Erfindungsgemäß wird bei einer Anordnung mit einem Portalhubgerät in Form eines Straddle Carriers zum Umschlag von Containern, insbesondere von ISO-Containern, wobei das Portalhubgerät eingerichtet ist, um mittels Rasternavigation automatisch geführt navigieren zu können, und wobei das Portalhubgerät eine Sensorvorrichtung zur Navigation des Portalhubgeräts und ein Lichtraumprofil aufweist, das derart ausgebildet ist, dass das Portalhubgerät kollisionsfrei über einen Container hinweg fahren kann, und mit einer Reihe von beabstandeten Markierungselementen zur Rasternavigation, wobei das Portalhubgerät und die Reihe von Markierungselementen derart angeordnet sind, dass das Portalhubgerät mittels Rasternavigation entlang der Reihe von Markierungselementen verfahrbar ist, wobei die Reihe von Markierungselementen von der Sensorvorrichtung des Portalhubgeräts auslesbar ist, eine Verbesserung dadurch erreicht, dass die Sensorvorrichtung in einer Betriebsstellung außerhalb des Lichtraumprofils angeordnet ist, um in der Betriebsstellung die Reihe von Markierungselementen zur Navigation des Portalhubgeräts auszulesen, wobei die Reihe von Markierungselementen neben, insbesondere sowohl horizontal als auch vertikal neben, dem Lichtraumprofil des Portalhubgeräts und unterhalb eines Fahrwerkträgers des Portalhubgeräts angeordnet ist.

Es ist also vorgesehen, dass die Sensorvorrichtung derart an dem Portalhubgerät angeordnet ist, dass Markierungselemente auslesbar sind, die neben dem Lichtraumprofil angeordnet sind. Die Markierungselemente sind hierbei vorzugsweise neben einer vertikalen Projektionsfläche des Lichtraumprofils sowie insbesondere unterhalb einer vertikalen Projektionsfläche eines Sensors der Sensorvorrichtung und insbesondere unterhalb des ersten und/oder zweiten Fahrwerkträgers des Portalhubgeräts beziehungsweise einer vertikalen Projektionsfläche des entsprechenden Fahrwerkträgers angeordnet. Unter vertikaler Projektionsfläche wird vorliegend die Fläche einer vertikalen Projektion auf den Boden unterhalb des Portalhubgeräts verstanden. Die Markierungselemente sind nach diesem Verständnis auch dann neben dem Lichtraumprofil beziehungsweise dessen vertikaler Projektionsfläche angeordnet, wenn sie hierbei vollständig in dem Boden beziehungsweise unter dessen Oberfläche in die Fahrbahn eingebettet und somit nicht nur horizontal neben dem Lichtraumprofil beziehungsweise dessen vertikaler Projektionsfläche, sondern in Bezug auf das Lichtraumprofil zusätzlich auch tiefer und damit sowohl horizontal als auch vertikal neben dem Lichtraumprofil angeordnet sind. Allerdings sind die Markierungselemente nach diesem Verständnis nicht neben dem Lichtraumprofil angeordnet, wenn sie ohne horizontalen Versatz aufgrund ihrer Einbettung in die Fahrbahn lediglich tiefer als das Lichtraumprofil und somit nur unterhalb des Lichtraumprofils angeordnet sind.

Erst durch die in der Betriebsstellung außerhalb des Lichtraumprofils positionierte Sensorvorrichtung sowie die hierbei im obigen Sinne neben dem Lichtraumprofil angeordneten Markierungselemente ist es damit möglich, dass das Portalhubgerät auch während der Aufnahme oder Abgabe eines Containers beim Ladebetrieb uneingeschränkt und ungehindert mittels Rasternavigation automatisch geführt navigieren kann. Die Sensorvorrichtung lässt somit in ihrer Betriebsstellung ein Aufnehmen beziehungsweise Absetzen des zu transportierenden Containers zu. Die Anordnung der bodennahen Sensorvorrichtung außerhalb des Lichtraumprofils wirkt sich auch vorteilhaft auf den Fahrbetrieb aus, da sich die Sensorvorrichtung in ihrer Betriebsstellung während des Fahrbetriebs anders als im obigen Stand der Technik nicht unterhalb des Containers befindet, der hierfür entsprechend hoch genug anzuheben ist. Die für den Fahrbetrieb erforderliche Mindesthubhöhe des Containers ist somit in vorteilhafter Weise unabhängig von der Betriebsstellung der Sensorvorrichtung. Durch die Anordnung der Sensorvorrichtung außerhalb des Lichtraumprofils wäre ein mittels der Sensorvorrichtung erfolgender Automatikbetrieb nach dem Prinzip der Rasternavigation auch dann möglich, wenn das Lichtraumprofil vollständig von anderen Objekten durchdrungen beziehungsweise ausgefüllt wäre.

Die vorzugsweise an einem oder beiden der zwei Fahrwerkträger und insbesondere an dessen jeweiliger Unterseite angeordnete Sensorvorrichtung umfasst hierbei mindestens einen Sensor in Form einer Antenne oder eines Magnetfeldsensors, um die als Transponder oder Magnet ausgebildeten Markierungselemente, insbesondere deren Koordinaten, auslesen und hierbei gegebenenfalls decodieren zu können. Grundsätzlich kann der Sensor auch eine Antenne und einen Magnetfeldsensor umfassen. Wie anhand der Figurenbeschreibung unten näher erläutert wird, kann die Sensorvorrichtung auch mehrere Sensoren aufweisen. Wenn zur Navigation Transponder verwendet werden, kommt in der Regel das so genannte Halbduplex-Verfahren mit einer entsprechend hierfür geeigneten Sensorvorrichtung zum Einsatz. Hierbei sendet die Sensorvorrichtung zunächst ein elektromagnetisches Feld aus, um die Transponder energetisch aufzuladen, so dass die Transponder anschließend als Antwort Informationen wie die entsprechenden Koordinaten senden können. Die gesendeten Informationen werden dann wiederum von der Sensorvorrichtung empfangen und ausgelesen sowie zur Navigation des Portalhubgeräts verwendet.

Durch die Anordnung der Sensorvorrichtung außerhalb des Lichtraumprofils können auch bereits vorhandene rasterartig angeordnete Markierungselemente auf einfache Weise für eine Rasternavigation genutzt und hierzu einer Fahrspur so zugeordnet werden, dass das Portalhubgerät beziehungsweise dessen Fahrwerkträger in Bezug zu den Markierungselementen derart angeordnet wird, dass die Markierungselemente von der Sensorvorrichtung ausgelesen werden können. Auf diese Weise kann eine Erhöhung der Rasterdichte von Markierungselementen vermieden werden.

In konstruktiv einfacher Weise ist vorgesehen, dass die Sensorvorrichtung einen ersten Teil mit mindestens einem Sensor und einen zweiten Teil mit mindestens einem Sensor umfasst. Dementsprechend sind beide Teile der Sensorvorrichtung in der Betriebsstellung außerhalb des Lichtraumprofils angeordnet. Vorzugsweise ist hierbei an jedem von zwei Fahrwerkträgern des Portalhubgeräts ein Teil der Sensorvorrichtung angeordnet, um unterhalb des ersten und/oder zweiten Fahrwerkträgers beziehungsweise der zugehörigen vertikalen Projektionsfläche angeordnete Markierungselemente auslesen zu können. Hierfür können die Teile der Sensorvorrichtung jeweils an der Unterseite des entsprechenden Fahrwerkträgers angeordnet sein. Auch kann jeder Teil der Sensorvorrichtung wie in der unten folgenden Figurenbeschreibung erläutert zwei oder mehr Sensoren aufweisen, so dass die Sensorvorrichtung insgesamt beispielsweise vier Sensoren umfassen kann.

Die Anordnung umfasst vorzugsweise auch eine Fahrspur, der die Reihe von Markierungselementen so zugeordnet ist, dass zumindest in einem Abschnitt der Fahrspur die Reihe von Markierungselementen in Richtung der Längserstreckung der Fahrspur gesehen nur in der linken oder nur in der rechten Hälfte angeordnet ist.

In einer besonders bevorzugten alternativen Ausgestaltung der Anordnung ist vorgesehen, dass die Reihe von Markierungselementen so in Bezug auf das Portalhubgerät und insbesondere unterhalb eines seiner Fahrwerke angeordnet ist, dass die Reihe von Markierungselementen nur von dem ersten Teil der Sensorvorrichtung, der zumindest einen Sensor aufweist, oder nur von dem zweiten Teil der Sensorvorrichtung, der zumindest einen Sensor aufweist, auslesbar ist. In dem entsprechenden Abschnitt der Fahrspur ist also nur die eine Reihe von Markierungselementen in einer der beiden Hälften der Fahrspur angeordnet, insbesondere nur unterhalb von einem der beiden Teile der Sensorvorrichtung, der vorzugsweise an einem der beiden Fahrwerkträger beziehungsweise dessen Unterseite angeordnet ist. In derartigen Abschnitten wäre zur Rasternavigation also auch nur einer der beiden Teile der Sensorvorrichtung erforderlich, um die Markierungselemente auszulesen, da der jeweils andere Teil keine Markierungselemente detektieren und auslesen kann. Dementsprechend ist in der anderen Hälfte der Fahrspur beziehungsweise unterhalb des anderen Fahrwerkträgers auch keine zweite Reihe von Markierungselementen erforderlich. Damit lässt sich die Gesamtzahl der für eine zuverlässige Rasternavigation erforderlichen Markierungselemente erheblich reduzieren. Das Portalhubgerät könnte in entsprechenden Abschnitten im Sinne einer Mindestkonfiguration auch nur mit einem der beiden Teile der Sensorvorrichtung mit einem einzigen Sensor ausgerüstet werden.

Hierbei kann außerdem in vorteilhafter Weise vorgesehen sein, dass sich an die Reihe von Markierungselementen eine abzweigende Reihe von beabstandeten Markierungselementen derart anschließt, dass das Portalhubgerät mittels Rasternavigation entlang der abzweigenden Reihe von Markierungselementen verfahrbar ist, wobei die abzweigende Reihe von Markierungselementen nur von dem ersten Teil oder nur von dem zweiten Teil der Sensorvorrichtung des Portalhubgeräts auslesbar ist. Hierbei können die beiden Reihen von Markierungselementen so zueinander angeordnet sein, dass sich eine Abzweigung in eine quer verlaufende zweite Fahrspur ergibt. Dann ist es beim Abbiegen des Portalhubgeräts entlang der Abzweigung in die zweite Fahrspur möglich, dass derselbe Teil der Sensorvorrichtung vor und nach dem Abbiegen von der ersten zur abzweigenden Reihe Markierungselemente ausliest oder nach dem Abbiegen der jeweils andere Teil der Sensorvorrichtung Markierungselemente ausliest. Es kann also ein Wechsel dahingehend erfolgen, dass nach dem Abbiegen auf einer anderen Fahrzeugseite des Portalhubgeräts Markierungselemente ausgelesen werden als vor dem Abbiegen. Dies gilt sowohl für das Abbiegen nach links als auch für das Abbiegen nach rechts, je nachdem in welcher Hälfte der zweiten Fahrspur die abzweigende Reihe von Markierungselementen angeordnet ist. In diesem Fall benötigt das Portalhubgerät somit auch die beiden Teile der Sensorvorrichtung mit jeweils mindestens einem Sensor. Es kann jedoch auch in entsprechenden Abschnitten der abzweigenden zweiten Fahrspur in vorteilhafter Weise auf eine zweite Reihe von Markierungselementen verzichtet werden.

In vorteilhafter Ausgestaltung kann also vorgesehen sein, dass nach einem Abbiegen des Portalhubgeräts die Markierungselemente so in Bezug auf das Portalhubgerät angeordnet sind, dass die abzweigende Reihe von Markierungselementen von demselben oder einem anderen Teil der Sensorvorrichtung auslesbar ist als vor dem Abbiegen.

Außerdem kann vorgesehen sein, dass eine Fahrspur für das Portalhubgerät vorgesehen ist, der die Reihe von Markierungselementen so zugeordnet ist, dass zumindest in einem Abschnitt der Fahrspur die Reihe von Markierungselementen in Richtung der Längserstreckung der Fahrspur gesehen nur in der linken oder nur in der rechten Hälfte angeordnet ist und insbesondere in dem Abschnitt der Fahrspur in der rechten oder in der linken Hälfte keine Markierungselemente angeordnet sind.

In einem sich an den Abschnitt anschließenden Kreuzungsbereich zweier Fahrspuren, der die beiden Fahrspuren beziehungsweise zumindest zwei voneinander abzweigende Reihen von Markierungselementen miteinander verbindet, sowie insbesondere in hieran angrenzenden Bereichen können jedoch auch zusätzliche Markierungselemente vorgesehen werden, um sicherzustellen, dass stets mindestens zwei Markierungselemente ausgelesen werden können, wenn das Portalhubgerät beim Abbiegen durch den entsprechenden Kreuzungsbereich navigiert wird. Insbesondere in den Kreuzungsbereichen kann auch auf jeder Fahrzeugseite ein Markierungselement detektiert und ausgelesen werden.

In vorteilhafter Weise kann außerdem vorgesehen sein, dass in dem Kreuzungsbereich in Richtung der Längserstreckung von beiden sich kreuzenden Fahrspuren gesehen in der linken und der rechten Hälfte jeweils eine Reihe von Markierungselementen angeordnet ist.

Gemäß einer weiteren vorteilhaften Anordnung ist eine zweite Reihe von beabstandeten Markierungselementen vorgesehen, die so angeordnet ist, dass das Portalhubgerät mittels Rasternavigation entlang der beiden Reihen von Markierungselementen verfahrbar ist, wobei eine der beiden Reihen von Markierungselementen von einem ersten Teil der Sensorvorrichtung, der zumindest einen Sensor aufweist, auslesbar ist und die andere der beiden Reihen von Markierungselementen von einem zweiten Teil der Sensorvorrichtung, der zumindest einen Sensor aufweist, auslesbar ist. Vorzugsweise ist hierbei die zweite Reihe von Markierungselementen in dem Abschnitt der oben genannten Fahrspur so angeordnet, dass jeweils nur eine der Reihen in einer Hälfte der Fahrspur verläuft und hierbei insbesondere beide Reihen parallel zueinander verlaufen. Das Portalhubgerät fährt hierbei also zugleich entlang der beiden Reihen, wobei auch deren Markierungselemente ausgelesen werden.

Es kann zudem vorgesehen sein, dass sich an die beiden Reihen von Markierungselementen zwei abzweigende Reihen von beabstandeten Markierungselementen derart anschließen, dass das Portalhubgerät mittels Rasternavigation entlang der abzweigenden Reihen von Markierungselementen verfahrbar ist, wobei eine der beiden abzweigenden Reihen von Markierungselementen von dem ersten Teil der Sensorvorrichtung auslesbar ist und die andere der beiden abzweigenden Reihen von Markierungselementen von dem zweiten Teil der Sensorvorrichtung auslesbar ist. Hierbei sind die Reihen von Markierungselementen so zueinander angeordnet, dass sich eine Abzweigung in eine quer verlaufende zweite Fahrspur ergibt. Die beiden abzweigenden Reihen sind in einem entsprechenden Abschnitt der abzweigenden zweiten Fahrspur analog zu den zuvor genannten zwei Reihen angeordnet, so dass jeweils nur eine der abzweigenden Reihen in einer Hälfte der abzweigenden Fahrspur verläuft und hierbei insbesondere beide abzweigenden Reihen parallel zueinander verlaufen. Die Anordnung des Portalhubgeräts beziehungsweise der beiden Teile der Sensorvorrichtung in Bezug auf die jeweiligen beiden Reihen von Markierungselementen ist vor und nach dem Abbiegen in die zweite Fahrspur identisch.

Die Erfindung wird anhand der nachfolgenden Figuren beschrieben. Es zeigen:
Figur 1a ein Portalhubgerät in einem System zur Navigation des Portalhubgeräts in einer ersten Ausführungsform,
Figur 1b das Portalhubgerät aus Figur 1a in einem System zur Navigation des Portalhubgeräts in einer zweiten Ausführungsform,
Figur 2 eine Ansicht des Portalhubgeräts aus den Figuren 1a und 1b von unten,
Figur 3 eine Ansicht des Systems und des Portalhubgeräts aus den Figuren 1a und 1b von der Seite,
Figur 4a verschiedene Positionen des Portalhubgeräts in dem System zur Navigation des Portalhubgeräts gemäß der ersten Ausführungsform in einer Draufsicht und
Figur 4b die Positionen des Portalhubgeräts aus Figur 4a in dem System zur Navigation des Portalhubgeräts gemäß der zweiten Ausführungsform in einer Draufsicht.

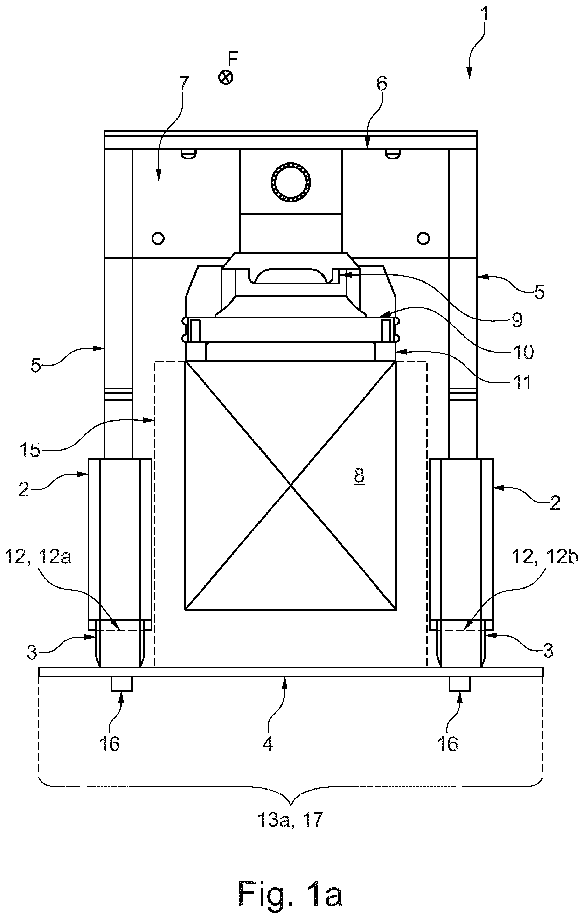

Die Figur 1a zeigt in einer schematischen Darstellung eine erste Ausführungsform eines Systems zur Navigation eines Portalhubgeräts 1 in einem Containerumschlagbetrieb. Das in dieses System eingebundene Portalhubgerät 1 lässt sich automatisch mittels einer Rasternavigation im oben definierten Sinne führen und wird dementsprechend fahrerlos beziehungsweise unbemannt betrieben und gesteuert. In diesem Sinne kann ein fahrerloser Automatik-Betrieb eines entsprechenden Portalhubgeräts 1 auch dann gegeben sein, wenn ein Fahrer zwar mitfährt, hierbei jedoch nicht aktiv in die Steuerung des Portalhubgeräts 1 eingreift.

Das Portalhubgerät 1 weist zwei zueinander parallele und in Längsrichtung des Portalhubgeräts 1 ausgerichtete Fahrwerkträger 2 auf, an denen lenkbare Räder 3 gelagert sind. Da in Figur 1a beispielhaft eine Rückansicht des Portalhubgeräts 1 während einer Geradesausfahrt in Fahrtrichtung F dargestellt ist, sind nur die hinteren Räder 3 erkennbar und die vorderen Räder 3 verdeckt. Die Räder 3, von denen jeweils zwei an einem der Fahrwerkträger 2 angeordnet sind, sind mit einer mit Luft oder Gasen befüllten Gummibereifung im Sinne von Pneus versehen und hierüber flurgebunden, aber nicht schienengebunden und somit frei verfahrbar, wobei sie auf einem Boden 4 eines Containerterminals, vorzugsweise in einem Hafen, abrollen. Dementsprechend sind die vorliegend betroffenen Portalhubgeräte 1 von Schienenfahrzeugen zu unterscheiden. Die Räder 3 sind in üblicher Weise in den Ecken eines gedachten Rechtecks angeordnet. Grundsätzlich ist es auch möglich, mehr als vier gummibereifte Räder 3 vorzusehen, wenn dies technisch erforderlich ist. Hiermit einher geht dann, dass sich die Komplexität des Portalhubgerätes 1 insgesamt erhöht und somit eine aufwendigere Technik im Bereich des Antriebes und der Lenkung zum Einsatz kommen muss. Der Antrieb des Portalhubgeräts 1 ist üblicher Weise dieselelektrisch, dieselhydraulisch oder vollelektrisch, insbesondere batterie-elektrisch ausgebildet und umfasst dementsprechend Komponenten wie beispielsweise einen Dieselmotor und Generator, Batterien und/oder Hydraulikaggregate. Von den Fahrwerkträgern 2 erstrecken sich zur Ausbildung des spinnenbeinartigen Portalaufbaus jeweils vorne und hinten senkrecht nach oben insgesamt vier Portalstützen 5, die mit einer aufgesetzten, die Portalstützen 5 verbindenden Maschinenbühne 6 ein Portal 7 bilden. Auf der Maschinenbühne 6 des Portals 7 ist eine Hubvorrichtung 9 für einen Container 8 angeordnet, mit der ein als Spreader 10 bezeichnetes Lastaufnahmemittel für die Container 8 heb- und senkbar verbunden ist. Der Spreader 10 kann zur Lastaufnahme mit dem Container 8 an seinen vier Eckbeschlägen 11 verriegelt werden.

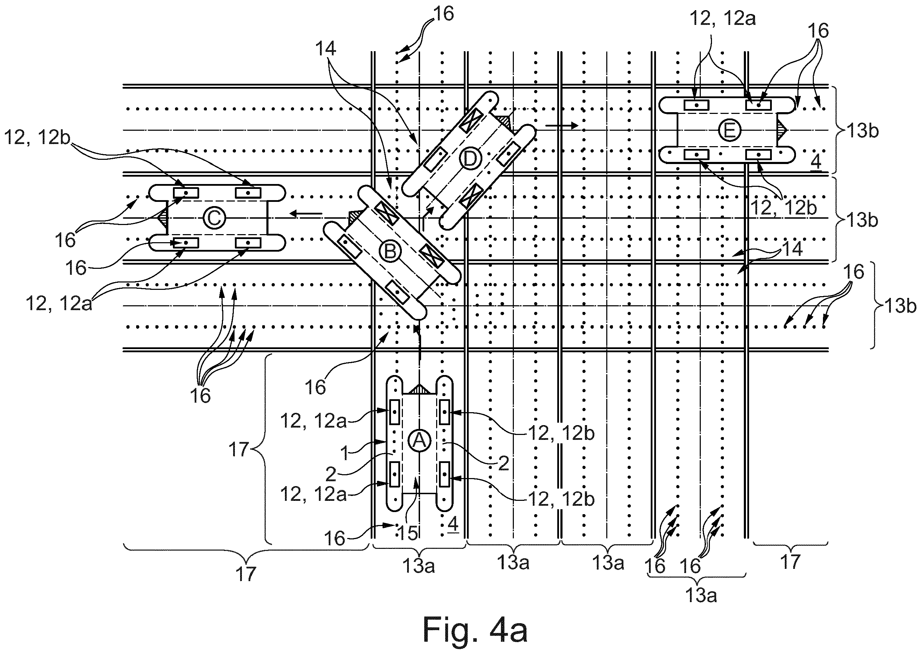

Wie in Figur 1a beispielhaft dargestellt ist, kann das Portalhubgerät 1 innerhalb einer auf dem Boden 4 definierten ersten Fahrspur 13a verfahren und hierbei nach dem Prinzip der Rasternavigation automatisch geführt werden. Im Rahmen dessen werden kontinuierlich die genauen Fahrzeugpositionen und -orientierungen auf dem Boden 4 des Containerterminals und insbesondere innerhalb der ersten Fahrspur 13a ermittelt. Zu diesem Zweck sind der ersten Fahrspur 13a zwei Reihen von Markierungselementen 16 (siehe auch Figur 4a) zugeordnet, die innerhalb der ersten Fahrspur 13a im Bereich des Bodens 4 angeordnet sind. In Richtung der Längserstreckung der Fahrspur 13a gesehen weist die erste Fahrspur 13a zwei Hälften auf. In dem in Figur 1a dargestellten Abschnitt 17 (siehe auch Figur 4a) der Fahrspur 13a ist jeder dieser Hälften eine der beiden Reihen von Markierungselementen 16 zugeordnet. Beide Reihen verlaufen vorzugsweise parallel zueinander. Bedingt durch die in Figur 1a gewählte Ansicht ist jedoch nur ein Markierungselement 16 jeder Reihe erkennbar. Vorzugsweise sind die beiden Reihen so zueinander beabstandet, dass unter jedem Fahrwerkträger 2 beziehungsweise dessen vertikaler Projektionsfläche jeweils eine Reihe von Markierungselementen 16 angeordnet ist, um von der Sensorvorrichtung 12 des Portalhubgeräts 1 ausgelesen werden zu können.

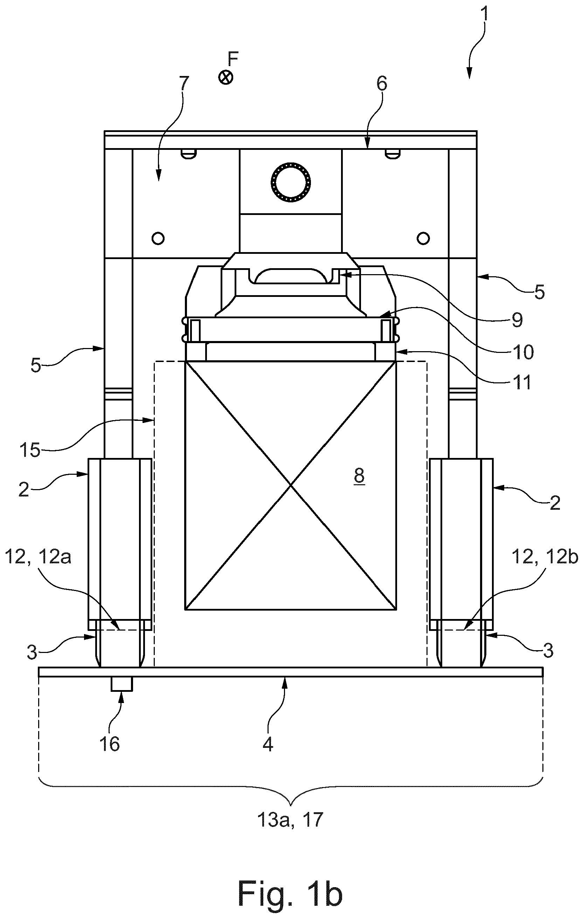

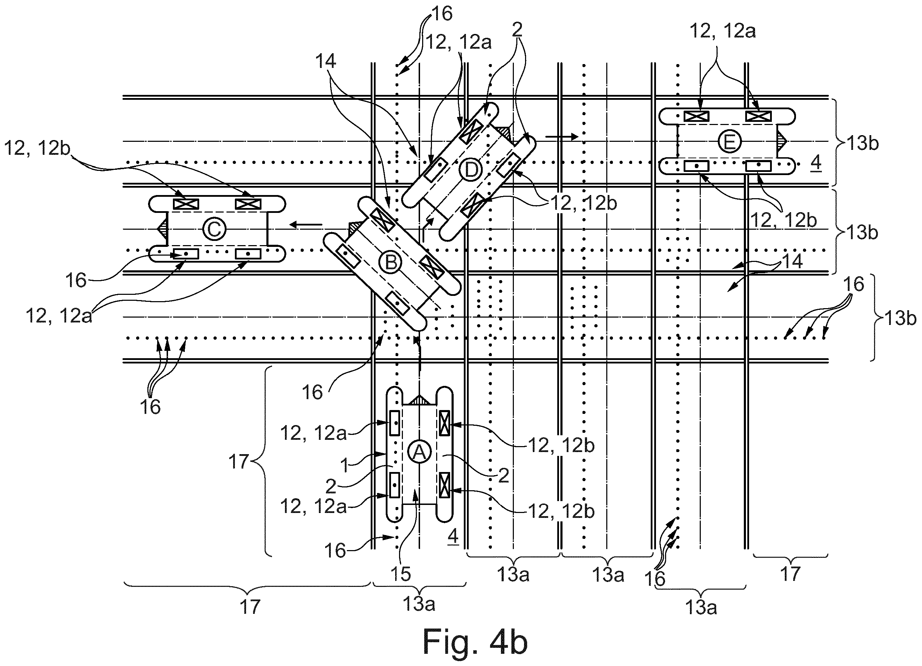

Die Figur 1b zeigt das Portalhubgerät aus Figur 1a in einer zweiten Ausführungsform des Systems zur Navigation des Portalhubgeräts 1. Die in Figur 1b dargestellte zweite Ausführungsform unterscheidet sich von der ersten Ausführungsform im Wesentlichen dadurch, dass in der ersten Fahrspur 13a zumindest in dem Abschnitt 17 nur eine Reihe von Markierungselementen 16 vorgesehen ist (siehe auch Figur 4b). Gegenüber der ersten Ausführungsform ist also wie in der Figur 1b dargestellt eine der beiden Reihen von Markierungselementen 16 der ersten Ausführungsform weggelassen. Beispielhaft ist in Figur 1b in dem Abschnitt 17 nur in der linken Hälfte der Fahrspur 13a eine Reihe von Markierungselementen 16 angeordnet, wohingegen die rechte Hälfte der Fahrspur 13a in dem Abschnitt 17 frei von Markierungselementen 16 ist. Hierbei ist die jeweilige Reihe von Markierungselementen 16 unterhalb von einem der beiden Fahrträger 2, insbesondere unterhalb von dessen vertikaler Projektion auf den Boden 4, angeordnet. Unterhalb des anderen der beiden Fahrträger 2 sind dementsprechend keine Markierungselemente 16 angeordnet. Alternativ kann die Zuordnung der Reihe von Markierungselementen 16 innerhalb der Fahrspur 13a auch umgekehrt erfolgen, so dass nur in der rechten Hälfte des Abschnitts 17 der Fahrspur 13a Markierungselemente 16 angeordnet sind. Im Übrigen gelten die Ausführungen zu Figur 1a entsprechend auch für Figur 1b.

Die Markierungselemente 16 umfassen jeweils einen Transponder, insbesondere einen passiven Transponder, oder einen Magneten. Hierbei können die Markierungselemente 16 in den Boden 4 eingelassen und insbesondere vollständig unter einer Oberfläche des Bodens 4 angeordnet sein, auf dem die Räder 3 des Portalhubgeräts 1 abrollen. Das Portalhubgerät 1 wird automatisch entlang der Reihe von Markierungselementen 16 geführt, indem die Markierungselemente 16 von einer Sensorvorrichtung 12 des Portalhubgeräts 1 ausgelesen werden und die ausgelesenen Informationen als Messsignale in die automatische Navigation des Portalhubgerätes 1 einfließen können. Hierfür sind in jedem Markierungselement 16 als Information die Koordinaten des entsprechenden Markierungselements 16 gespeichert und zum Auslesen zur Verfügung gestellt. Das Auslesen kann auch ein Decodieren der Informationen erfassen, sofern diese in den Markierungselementen 16 in codierter Form gespeichert beziehungsweise zum Auslesen zur Verfügung gestellt sind.

Um die Position und Ausrichtung des Portalhubgeräts 1 ermitteln zu können, werden von der Sensorvorrichtung 12 immer zwei voneinander beabstandete Markierungselemente 16 ausgelesen. Dadurch lässt sich die Position und Ausrichtung des Portalhubgeräts 1 sowohl relativ zu den entsprechenden Markierungselementen 16 als auch hierüber innerhalb des Containerterminals beziehungsweise der entsprechenden Fahrspur 13a, 13b ermitteln und für die automatisch geführte Navigation verwenden. Die Sensorvorrichtung 12 kann prinzipiell einteilig ausgebildet sein und nur einen Sensor umfassen, der dann dementsprechend so ausgebildet ist, dass von dem Sensor zugleich zwei Markierungselemente 16 ausgelesen werden können. Eine kontinuierliche Ermittlung der Fahrzeugposition und -orientierung ist also bereits möglich, wenn nur im Bereich einer einzigen Fahrzeugseite beziehungsweise des dortigen Fahrwerkträgers 2 ein Sensor der Sensorvorrichtung 12 vorgesehen ist. Dies ist auch möglich, wenn das System gemäß der zweiten Ausführungsform Abschnitte 17 mit nur einer Reihe von Markierungselementen 16 aufweist. Alternativ können für die Sensorvorrichtung 12 auch einfachere Sensoren verwendet werden, die nicht zugleich mehrere Markierungselemente 16, sondern immer nur jeweils ein Markierungselement 16 auslesen können. In diesem Fall weist die Sensorvorrichtung 12 mindestens zwei solcher einfacher Sensoren auf. Die Abmessungen des Sensors beziehungsweise der Sensoren der Sensorvorrichtung 12 und die Abstände der Markierungselemente 16 sind entsprechend aufeinander abzustimmen. Da mit größerem Abstand der Markierungselemente 16 eine genauere Positions- und Lageermittlung des Portalhubgeräts 1 möglich ist, können die einfacheren Sensoren kleinere Abmessungen aufweisen und in dem erforderlichen Abstand am Portalhubgerät 1 angebracht werden. Dadurch kann die Sensorvorrichtung 12 zudem insgesamt in kleineren Aufnahmeräumen untergebracht werden. Außerdem kann der Raum zwischen den Sensoren zur Unterbringung anderer Komponenten genutzt werden und es kann ein weiterer Abstand der Markierungselemente 16 und somit eine Reduzierung der Gesamtzahl der benötigten Markierungselemente 16 erreicht werden.

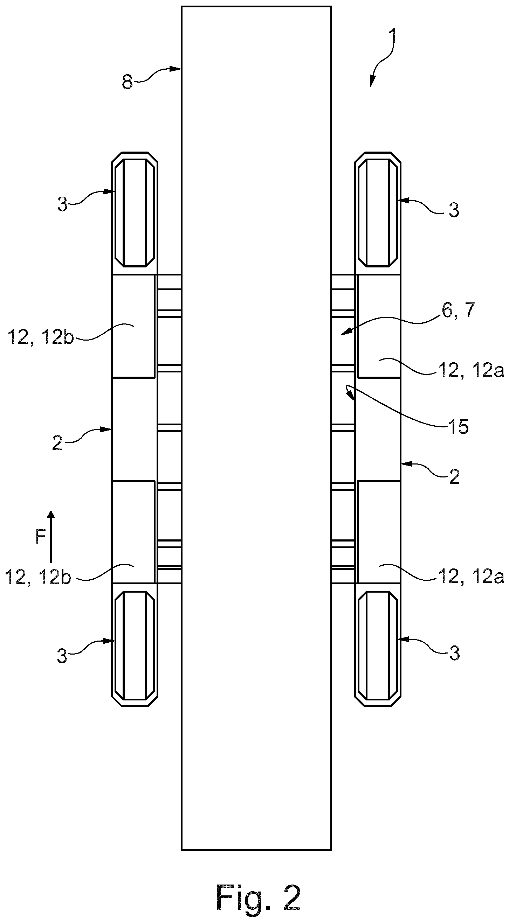

Bei dem in beiden Ausführungsformen des Systems zur Navigation einsetzbaren Portalhubgerät 1 umfasst die Sensorvorrichtung 12 vier Sensoren, die jeweils ein Markierungselement 16 auslesen können. Zwei der insgesamt vier Sensoren sind voneinander beabstandet vorne und hinten am linken ersten Fahrwerkträger 2 zwischen den zugehörigen Rädern 3 angeordnet und bilden einen ersten Teil 12a der Sensorvorrichtung 12 (siehe auch Figuren 2, 3, 4a und 4b). In gleicher Weise sind zwei Sensoren am rechten zweiten Fahrwerkträger 2 angeordnet, die einen zweiten Teil 12b der Sensorvorrichtung 12 bilden. Es ist also auf jeder Fahrzeugseite des Portalhubgeräts 1 einer der Teile 12a beziehungsweise 12b der Sensorvorrichtung 12 angeordnet. In den Figuren 1a und 1b ist der jeweils hintere Sensor der beiden Teile 12a, 12b gestrichelt dargestellt. Die Teile 12a, 12b können auch jeweils nur einen Sensor umfassen, der zugleich zwei Markierungselemente 16 auslesen kann.

In den Figuren 1a und 1b ist jeweils mit einer gestrichelten Linie ein Lichtraumprofil 15 des Portalhubgeräts 1 dargestellt, das unterhalb des Portalhubgeräts 1 derart ausgebildet und zumindest so groß bemessen ist, dass das Portalhubgerät 1 - senkrecht zur Zeichnungsebene - über mindestens einen Container 8 hinweg fahren kann, um den Container 8 zu passieren, aufzunehmen oder abzusetzen. Das Lichtraumprofil 15 umschließt folglich zumindest den lichten Raum unterhalb des Portalhubgeräts 1, der zum kollisionsfreien Überfahren mindestens eines Containers 8 benötigt wird. Hierbei erstreckt sich das Lichtraumprofil 15 zwischen den beiden Fahrwerkträgern 2 zumindest über eine Containerbreite zuzüglich eines gewissen Toleranzmaßes. Das Lichtraumprofil 15 entspricht somit zumindest der Außenkontur eines auf dem Boden 4 abgestellten Containers 8 zuzüglich des gewünschten Toleranzmaßes. Wenn das Portalhubgerät 1 beispielsweise als 1 über 3-Gerät ausgebildet ist, ist das Lichtraumprofil 15 entsprechend höher bemessen. Dementsprechend ist der Container 8 sowohl im Ladebetrieb beim Aufnehmen und Absetzen des Containers 8 als auch im Fahrbetrieb beim Transportieren des aufgenommenen Containers 8 innerhalb des Lichtraumprofils 15 angeordnet und durchdringt diesen. Das Lichtraumprofil 15 ist vorliegend also nicht als Außenkontur des Portalhubgeräts 1 zu verstehen.

Die Sensorvorrichtung 12 ist so am Portalhubgerät 1 beziehungsweise dessen Fahrwerkträgern 2 angeordnet, dass die Sensorvorrichtung 12 in ihrer Betriebsstellung außerhalb des Lichtraumprofils 15 angeordnet ist und in diesen somit nicht eindringt während das Portalhubgerät 1 mittels Rasternavigation automatisch geführt wird. Dies gilt sowohl beim Fahrbetrieb als auch beim Ladebetrieb und ebenso bei einer Leerfahrt ohne einen aufgenommenen Container 8. Der an dem Spreader 10 hängende Container 8 kann hierbei in dem Lichtraumprofil 15 auch tiefer als in Figur 1a dargestellt herabhängen, insbesondere bis unterhalb der Sensorvorrichtung 12, da diese außerhalb des Lichtraumprofils 15 angeordnet ist und dadurch eine Kollision mit dem Container 8 ausgeschlossen werden kann.

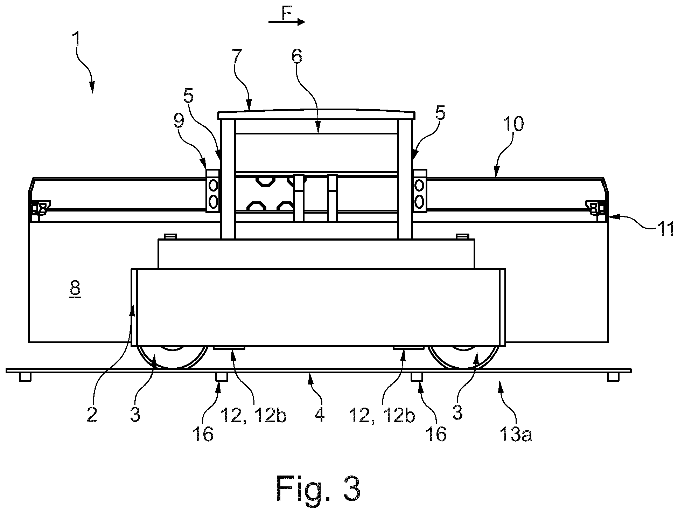

Die Figur 2 zeigt eine Ansicht des Portalhubgeräts 1 aus den Figuren 1a und 1b von unten. Erkennbar ist die Anordnung der beiden Teile 12a, 12b beziehungsweise der zugehörigen und voneinander beabstandeten Sensoren an entsprechenden Unterseiten der Fahrwerkträger 2. Die Sensoren beziehungsweise deren flache Gehäuse erstrecken sich horizontal beziehungsweise parallel zum Boden 4 (siehe auch Figuren 1a, 1b und 3) und weisen hierbei vorzugsweise eine rechteckige Grundfläche auf, die sich mit ihrer Längserstreckung in Fahrtrichtung F des Portalhubgerätes 1 erstreckt. Die Sensorvorrichtung 12 erstreckt sich hierbei wie auch in den Figuren 1a und 1b schematisch dargestellt in Richtung des Lichtraumprofils 15 und schließt bündig mit dem entsprechenden Fahrwerkträger 2 ab, so dass sowohl die Fahrwerkträger 2 als auch die Sensorvorrichtung 12 an das Lichtraumprofil 15 angrenzen und dieses begrenzen. Alternativ kann sich die Sensorvorrichtung 12 auch über den jeweiligen Fahrwerkträger 2 hinaus erstrecken, so dass sich das Lichtraumprofil 15 nicht bis zu beiden Fahrwerkträgern 2, sondern nur bis zur Sensorvorrichtung 12 erstreckt, an diese angrenzt und hiervon begrenzt wird. Auch ein Hervorstehen der Sensorvorrichtung 12 nach außen über den entsprechenden Fahrwerkträger 2 hinaus ist denkbar. Ebenso ist denkbar, dass die Sensorvorrichtung 12 sich zumindest teilweise innerhalb einer vertikalen Projektionsfläche des jeweiligen Fahrwerkträgers 2 erstreckt, ohne an die Projektionsfläche anzugrenzen. Die Sensorvorrichtung 12 muss sich also nicht über die gesamte Breite zwischen den Fahrwerkträgern 2 erstrecken, sondern kann durch die beschriebene Ausbildung und Anordnung und gegebenenfalls bündige Einpassung unterhalb der Fahrwerkträger 2 entsprechend schmaler und platzsparender ausgebildet sein. Durch die vorbeschriebene Anordnung und Ausbildung der Sensorvorrichtung 12 in ihrer Betriebsstellung wird das Lichtraumprofil 15 für ein Heben, Senken, Abstellen und Aufnehmen sowie Überfahren von Containern 8 nicht beeinträchtigt.

Jeder Sensor der Sensorvorrichtung 12 weist eine Antenne und/oder einen Magnetfeldsensor auf, um die ortsfest angeordneten Markierungselemente 16 auslesen zu können, sobald die entsprechenden Markierungselemente 16 sich durch die Bewegung des Portalhubgeräts 1 im Erfassungsbereich der Sensorvorrichtung 12 befinden. Der Erfassungsbereich umfasst üblicher Weise eine vertikale Projektionsfläche unterhalb der Sensorvorrichtung 12 beziehungsweise dessen Sensoren, wobei üblicher Weise ein Leseabstand zwischen den Sensoren und den Markierungselementen 16 einzuhalten ist, der beispielsweise etwa 10 bis 40 cm betragen kann. Hierfür sind die Sensoren der Sensorvorrichtung 12 entsprechend knapp in einem Nahbereich über dem Boden 4 beziehungsweise den dort vorgesehenen Markierungselementen 16 am Portalhubgerät 1 angeordnet.

Die Figuren 4a und 4b zeigen jeweils eine der beiden Ausführungsformen des Systems zur Navigation von Portalhubgeräten 1 und in diesem Zusammenhang verschiedene Positionen beziehungsweise Anordnungen des Portalhubgeräts 1 in einer Draufsicht. Dargestellt sind jeweils mehrere nebeneinander angeordnete und sich parallel zueinander erstreckende erste Fahrspuren 13a sowie mehrere zweite Fahrspuren 13b, die ebenfalls parallel zueinander und nebeneinander angeordnet sind und die ersten Fahrspuren 13a jeweils in einem Kreuzungsbereich 14 kreuzen.

In Figur 4a sind jeder Fahrspur 13a, 13b wie oben bereits anhand von Figur 1a beschrieben zwei Reihen von Markierungselementen 16 zugeordnet. Dadurch kann das dargestellte Portalhubgerät 1 zumindest bei Geradeausfahrten in den entsprechenden Fahrspuren 13a, 13b, beispielsweise in den exemplarisch dargestellten Positionen A, C und E, mit jedem Teil 12a, 12b der Sensorvorrichtung 12 die entsprechenden Markierungselemente 16 auslesen, da das Portalhubgerät 1 dort immer mit beiden Fahrwerkträgern 2 und den zugehörigen Sensoren über den Markierungselementen 16 angeordnet ist.

In Figur 4b ist demgegenüber jeder Fahrspur 13a, 13b wie oben bereits anhand von Figur 1b beschrieben nur eine einzige Reihe von Markierungselementen 16 zugeordnet. Dies gilt zumindest für die dargestellten Abschnitte 17 und mit Ausnahme der Kreuzungsbereiche 14. Dadurch kann das dargestellte Portalhubgerät 1 zumindest bei Geradeausfahrten in den Abschnitten 17 der entsprechenden Fahrspuren 13a, 13b, beispielsweise in den exemplarisch dargestellten Positionen A, C und E, nur mit einem der beiden Teile 12a, 12b der Sensorvorrichtung 12 die entsprechenden Markierungselemente 16 auslesen. Es werden also zumindest in den Abschnitten 17 nur im Bereich einer Fahrzeugseite beziehungsweise eines Fahrwerkträgers 2 von der dortigen Sensorvorrichtung 12 Markierungselemente 16 ausgelesen. Hierfür ist das Portalhubgerät 1 dort entsprechend innerhalb der entsprechenden Fahrspur 13a beziehungsweise 13b in Bezug auf die entsprechende Reihe von Markierungselementen 16 angeordnet, insbesondere mit einem der beiden Fahrwerkträger 2 und den zugehörigen Sensoren über der entsprechenden Reihe von Markierungselementen 16. Somit ist es möglich, dass auf dem Containerterminal deutlich weniger Markierungselemente 16 benötigt werden, um mit einem entsprechenden Portalhubgerät 1 automatisch nach dem Prinzip der Rasternavigation navigieren zu können. Die Anzahl der Markierungselemente 16 kann insbesondere in den Abschnitten 17 auf die Hälfte reduziert werden im Vergleich zu der ersten Ausführungsform, bei der pro Fahrspur 13a, 13b zumindest in den Abschnitten 17 zwei parallele Reihen von Markierungselementen 16 angeordnet sind.

Es ist erkennbar, dass bei beiden Ausführungsformen diejenigen Markierungselemente 16, die von der Sensorvorrichtung 12 ausgelesen werden nie unterhalb des Lichtraumprofils 15, sondern immer daneben und insbesondere unterhalb von zumindest einem der beiden Fahrwerkträger 2 angeordnet sind. Zumindest in den Abschnitten 17 ist das Portalhubgerät 1 bei beiden Ausführungsformen vollständig innerhalb der entsprechenden Fahrspur 13a beziehungsweise 13b angeordnet.

Nachfolgend werden beispielhaft mögliche Fahrstrecken beschrieben, die das Portalhubgerät 1 sowohl in dem System der ersten als auch der zweiten Ausführungsform mittels Rasternavigation automatisch geführt zurücklegen kann.

In einer Ausgangsposition A ist das Portalhubgerät in Abschnitt 17 einer der ersten Fahrspuren 13a angeordnet. Hiervon ausgehend kann das Portalhubgerät 1 in einer Geradeausfahrt entlang der Längserstreckung der ersten Fahrspur 13a fahren. Auch kann das Portalhubgerät 1 über eine Position B nach links in eine der quer verlaufenden und sich an die erste Fahrspur 13a anschließenden zweiten Fahrspuren 13b abbiegen. Nach dem Abbiegen befindet sich das Portalhubgerät 1 in dem Abschnitt 17 der entsprechenden zweiten Fahrspur 13b in einer Position C, in welcher ebenfalls eine Geradeausfahrt folgen kann. Alternativ kann das Portalhubgerät 1 auch über eine Position D nach rechts in eine der quer verlaufenden und sich an die erste Fahrspur 13a anschließenden zweiten Fahrspuren 13b abbiegen. Nach dem Abbiegen befindet sich das Portalhubgerät 1 dann in der entsprechenden zweiten Fahrspur 13b in einer Position E, in welcher ebenfalls eine Geradeausfahrt folgen kann.

Für das automatisch geführte Abbiegen mittels Rasternavigation schließen sich gemäß der ersten Ausführungsform in Figur 4a an die in der ersten Fahrspur 13a vorgesehenen beiden Reihen von Markierungselementen 16 zwei nach links beziehungsweise rechts abzweigende Reihen von beabstandeten Markierungselementen 16 an, die der jeweiligen zweiten Fahrspur 13b in gleicher Weise zugeordnet sind wie die beiden Reihen der ersten Fahrspur 13a. Gemäß der zweiten Ausführungsform in Figur 4b ist zumindest in den Abschnitten 17 nur eine nach links beziehungsweise rechts abzweigende Reihe von Markierungselementen 16 vorgesehen. Die in der dargestellten Fahrtrichtung F des Portalhubgeräts 1 gesehen nach links abzweigende Reihe von Markierungselementen 16 ist in dieser Richtung gesehen ebenfalls in der linken Hälfte der zweiten Fahrspur 13a angeordnet.

Die in der dargestellten Fahrtrichtung des Portalhubgeräts 1 gesehen nach rechts abzweigende Reihe von Markierungselementen 16 ist in dieser Richtung gesehen in der rechten Hälfte der zweiten Fahrspur 13a angeordnet. Alternativ wäre bei der zweiten Ausführungsform jedoch auch jeweils eine umgekehrte Anordnung der Reihen von Markierungselementen 16 in der jeweils anderen Hälfte der entsprechenden Fahrspur 13a, 13b denkbar.

Die in Figur 4b gezeigte Anordnung führt dazu, dass beim Verfahren des Portalhubgeräts 1 innerhalb der ersten Fahrspur 13a, insbesondere bei einer Geradeausfahrt in dem Abschnitt 17, nur die im Bereich unterhalb des linken ersten Fahrwerkträgers 2 angeordnete Reihe von Markierungselementen 16 ausgelesen wird, da im Bereich unterhalb des rechten zweiten Fahrwerkträgers 2 keine Markierungselemente 16 angeordnet sind. Dementsprechend ist unterhalb der beiden Sensoren des ersten Teils 12a der Sensorvorrichtung 12 jeweils ein Markierungselement 16 skizziert. Die beiden Sensoren des zweiten Teils 12b der Sensorvorrichtung 12 sind hingegen mit einem X gekennzeichnet, da in der entsprechenden Position A keine Markierungselemente 16 detektierbar und auslesbar sind. Dies gilt auch für Fahrten in einer ersten Abbiegerichtung, im vorliegenden in Figur 4b dargestellten Beispiel also beim Abbiegen nach links während der Fahrt von Position A über Position B in die Position C.

Beim Verfahren des Portalhubgeräts 1 in einer zweiten Abbiegerichtung, im vorliegenden ebenfalls in Figur 4b dargestellten Beispiel beim Abbiegen nach rechts, wechselt die Seite des Portalhubgeräts 1, auf der die Sensorvorrichtung 12 die Markierungselemente 16 ausliest, von links nach rechts. Der Wechsel erfolgt während der Fahrt von Position A über Position D in die Position E beim Abbiegen im Bereich der Position D im jeweiligen Kreuzungsbereich 14. Hierbei kann wie in Figur 4b dargestellt kurzzeitig auch im Bereich jedes Fahrwerkträgers 2, das heißt von beiden Teilen 12a und 12b, ein Markierungselement 16 ausgelesen werden. Dies gilt auch für die erste Ausführungsform in Figur 4a. In dem entsprechenden Kreuzungsbereich 14 können in beiden Ausführungsformen gemäß Figur 4a und Figur 4b auch zusätzliche Markierungselemente 16 angeordnet werden, um sicherzustellen, dass immer zwei Markierungselemente 16 zugleich auslesbar sind. Spätestens wenn die Kurvenfahrt beim Abbiegen beendet und das Portalhubgerät 1 entsprechend in der zweiten Fahrspur 13b ausgerichtet ist, wird bei der zweiten Ausführungsform in Figur 4b nur noch die im Bereich unterhalb des rechten Fahrwerkträgers 2 angeordnete Reihe von Markierungselementen 16 mittels des dort angeordneten zweiten Teils 12b der Sensorvorrichtung ausgelesen. Auf der linken Seite werden dann keine Markierungselemente 16 mehr ausgelesen. Dies wird bei der sich an das Abbiegen anschließenden Weiterfahrt als Geradeausfahrt in der beispielhaften Position E fortgesetzt.

Wenn das Portalhubgerät 1 ohne Abbiegen in eine der zweiten Fahrspuren 13b eine der ersten Fahrspuren 13a entlang fährt, bleibt die Seite, auf der die Markierungselemente 16 ausgelesen werden, bestehen. Dies gilt bei der vorliegenden Anordnung auch bei einem Spurwechsel zwischen zwei benachbarten parallelen Fahrspuren 13a beziehungsweise 13b. Bei einem Wechsel der Fahrtrichtung F des Portalhubgeräts 1 in entgegengesetzter Richtung werden anschließend dieselben Markierungselemente 16 von denselben Sensoren ausgelesen. Jedoch befinden sich diese Sensoren dann in der neuen entgegengesetzten Fahrtrichtung F gesehen auf der anderen Fahrzeugseite des Portalhubgeräts 1 als vor dem Richtungswechsel.

Die Fahrspuren 13a und 13b sowie die jeweils zugeordneten Reihen von Markierungselementen 16 können sowohl in den Abschnitten 17 als auch in den Kreuzungsbereichen 14 abweichend von der geradlinigen Darstellung in den Figuren 4a und 4b selbstverständlich auch kurvige Verläufe aufweisen.

### Bezugszeichenliste

- 1: Portalhubgerät
- 2: Fahrwerkträger
- 3: Räder
- 4: Boden
- 5: Portalstütze
- 6: Maschinenbühne
- 7: Portal
- 8: Container
- 9: Hubvorrichtung
- 10: Spreader
- 11: Eckbeschläge
- 12: Sensorvorrichtung
- 12a: erster Teil der Sensorvorrichtung
- 12b: zweiter Teil der Sensorvorrichtung
- 13a: erste Fahrspur
- 13b: zweite Fahrspur
- 14: Kreuzungsbereich
- 15: Lichtraumprofil
- 16: Markierungselement
- 17: Abschnitt

- F: Fahrtrichtung

## Patentansprüche

1. Anordnung mit einem Portalhubgerät (1) in Form eines Straddle Carriers zum Umschlag von Containern (8), insbesondere von ISO-Containern, wobei das Portalhubgerät (1) eingerichtet ist, um mittels Rasternavigation automatisch geführt navigieren zu können, und wobei das Portalhubgerät (1) eine Sensorvorrichtung (12) zur Navigation des Portalhubgeräts (1) und ein Lichtraumprofil (15) aufweist, das derart ausgebildet ist, dass das Portalhubgerät (1) kollisionsfrei über einen Container (8) hinweg fahren kann, und mit einer Reihe von beabstandeten Markierungselementen (16) zur Rasternavigation, wobei das Portalhubgerät (1) und die Reihe von Markierungselementen (16) derart zueinander angeordnet sind, dass das Portalhubgerät (1) mittels Rasternavigation entlang der Reihe von Markierungselementen (16) verfahrbar ist, wobei die Reihe von Markierungselementen (16) von der Sensorvorrichtung (12) des Portalhubgeräts (1) auslesbar ist, **dadurch gekennzeichnet, dass** die Sensorvorrichtung (12a, 12b) in einer Betriebsstellung außerhalb des Lichtraumprofils (15) an dem Portalhubgerät (1) angeordnet ist, um in der Betriebsstellung die Reihe von Markierungselementen (16) zur Navigation des Portalhubgeräts (1) auszulesen, wobei die Reihe von Markierungselementen (16) neben dem Lichtraumprofil (15) des Portalhubgeräts (1) und unterhalb eines Fahrwerkträgers (2) des Portalhubgeräts (1) angeordnet ist.

2. Anordnung nach Anspruch 1, **dadurch gekennzeichnet, dass** die Sensorvorrichtung (12) einen ersten Teil (12a) mit einem Sensor und einen zweiten Teil (12b) mit einem Sensor umfasst.

3. Anordnung nach Anspruch 2, **dadurch gekennzeichnet, dass** die Reihe von Markierungselementen (16) so in Bezug auf das Portalhubgerät (1) und insbesondere unterhalb eines seiner Fahrwerkträger (2) angeordnet ist, dass die Reihe von Markierungselementen (16) nur von dem ersten Teil (12a) der Sensorvorrichtung (12), der zumindest einen Sensor aufweist, oder nur von dem zweiten Teil (12b) der Sensorvorrichtung (12), der zumindest einen Sensor aufweist, auslesbar ist.

4. Anordnung nach Anspruch 2 oder 3, **dadurch gekennzeichnet, dass** sich an die Reihe von Markierungselementen (16) eine abzweigende Reihe von beabstandeten Markierungselementen (16) derart anschließt, dass das Portalhubgerät (1) mittels Rasternavigation entlang der abzweigenden Reihe von Markierungselementen (16) verfahrbar ist, wobei die abzweigende Reihe von Markierungselementen (16) nur von dem ersten Teil (12a) oder nur von dem zweiten Teil (12b) der Sensorvorrichtung (12) des Portalhubgeräts (1) auslesbar ist.

5. Anordnung nach Anspruch 4, **dadurch gekennzeichnet, dass** nach einem Abbiegen des Portalhubgeräts (1) die Markierungselemente (16) so in Bezug auf das Portalhubgerät (1) angeordnet sind, dass die abzweigende Reihe von Markierungselementen (16) von demselben oder einem anderen Teil (12a, 12b) der Sensorvorrichtung (12) auslesbar ist als vor dem Abbiegen.

6. Anordnung nach einem der vorherigen Ansprüche, **dadurch gekennzeichnet, dass** eine Fahrspur (13a, 13b) für das Portalhubgerät (1) vorgesehen ist, der die Reihe von Markierungselementen (16) so zugeordnet ist, dass zumindest in einem Abschnitt (17) der Fahrspur (13a, 13b) die Reihe von Markierungselementen (16) in Richtung der Längserstreckung der Fahrspur (13a, 13b) gesehen nur in der linken oder nur in der rechten Hälfte angeordnet ist und insbesondere in dem Abschnitt (17) der Fahrspur (13a, 13b) in der rechten oder in der linken Hälfte keine Markierungselemente (16) angeordnet sind.

7. Anordnung nach Anspruch 6, **dadurch gekennzeichnet, dass** in einem sich an den Abschnitt (17) anschließenden Kreuzungsbereich (14) zweier Fahrspuren (14a, 14b) zusätzliche Markierungselemente (16) vorgesehen sind, um sicherzustellen, dass stets mindestens zwei Markierungselemente (16) von der Sensorvorrichtung (12) auslesbar sind.

8. Anordnung nach Anspruch 7, **dadurch gekennzeichnet, dass** in dem Kreuzungsbereich (14) in Richtung der Längserstreckung von beiden sich kreuzenden Fahrspuren (13a, 13b) gesehen in der linken und der rechten Hälfte jeweils eine Reihe von Markierungselementen (16) angeordnet ist.

9. Anordnung nach einem der Ansprüche 2 bis 8, **dadurch gekennzeichnet, dass** eine zweite Reihe von beabstandeten Markierungselementen (16) vorgesehen ist, die so angeordnet ist, dass das Portalhubgerät (1) mittels Rasternavigation entlang der beiden Reihen von Markierungselementen (16) verfahrbar ist, wobei eine der beiden Reihen von Markierungselementen (16) von dem ersten Teil (12a) der Sensorvorrichtung (12), der zumindest einen Sensor aufweist, auslesbar ist und die andere der beiden Reihen von Markierungselementen (16) von dem zweiten Teil (12b) der Sensorvorrichtung (12), der zumindest einen Sensor aufweist, auslesbar ist.

10. Anordnung nach Anspruch 9, **dadurch gekennzeichnet, dass** sich an die beiden Reihen von Markierungselementen (16) zwei abzweigende Reihen von beabstandeten Markierungselementen (16) derart anschließen, dass das Portalhubgerät (1) mittels Rasternavigation entlang der abzweigenden Reihen von Markierungselementen (16) verfahrbar ist, wobei eine der beiden abzweigenden Reihen von Markierungselementen (16) von dem ersten Teil (12a) der Sensorvorrichtung (12) auslesbar ist und die andere der beiden abzweigenden Reihen von Markierungselementen (16) von dem zweiten Teil (12b) der Sensorvorrichtung (12) auslesbar ist.

## Claims

1. Arrangement with a gantry lift device (1) in form of a straddle carrier for handling containers (8), in particular ISO containers, wherein the gantry lift device (1) is set up such that it can navigate automatically guided by means of grid navigation, and wherein the gantry lift device (1) comprises a sensor apparatus (12) for the navigation of the gantry lift device (1) and a clearance profile (15) which is formed in such a manner that the gantry lift device (1) can move without collision over a container (8), and comprising a row of spaced-apart marking elements (16) for grid navigation, wherein the gantry lift device (1) and the row of marking elements (16) are located in relation to each other such that the gantry lift device (1) can be moved along the row of marking elements (16) by means of grid navigation, wherein the row of marking elements (16) can be read by the sensor apparatus (12) of the gantry lift device (1), **characterised in that** the sensor apparatus (12a, 12b), in an operating position, is arranged outside the clearance profile (15) on the gantry lift device (1) in order, in the operating position, to read the row of marking elements (16) for the navigation of the gantry lift device (1), wherein the row of marking elements (16) is located next to the clearance profile (15) of the gantry lift device (1) and below a running gear support (2) of the gantry lift device (1).

2. Arrangement as claimed in claim 1, **characterised in that** the sensor apparatus (12) comprises a first part (12a) having a sensor and comprises a second part (12b) having a sensor.

3. Arrangement as claimed in claim 2, **characterised in that** the row of marking elements (16) is located in relation to the gantry lift device (1) and in particular underneath one of its running gear supports (2) such that the row of marking elements (16) can be read only by the first part (12a) of the sensor apparatus (12), which has at least one sensor, or only by the second part (12b) of the sensor apparatus (12) which has at least one sensor.

4. Arrangement as claimed in claim 2 or 3, **characterised in that** the row of marking elements (16) is adjoined by a branching row of spaced-apart marking elements (16) such that the gantry lift device (1) can be moved by means of grid navigation along the branching row of marking elements (16), wherein the branching row of marking elements (16) can be read only by the first part (12a) or only by the second part (12b) of the sensor apparatus (12) of the gantry lift device (1).

5. Arrangement as claimed in claim 4, **characterised in that**, after the gantry lift device (1) has turned, the marking elements (16) are located in relation to the gantry lift device (1) such that the branching row of marking elements (16) can be read by the same or a different part (12a, 12b) of the sensor apparatus (12) than that before the turn.

6. Arrangement as claimed in any one of the preceding claims, **characterised in that** a lane (13a, 13b) is provided for the gantry lift device (1), to which the row of marking elements (16) is allocated such that, at least in one portion (17) of the lane (13a, 13b), the row of marking elements (16) is located, as seen in the direction of the longitudinal extension of the lane (13a, 13b), only in the left half or only in the right half and no marking elements (16) are located in particular in the portion (17) of the lane (13a, 13b) in the right half or in the left half.

7. Arrangement as claimed in claim 6, **characterised in that** additional marking elements (16) are provided in a crossing region (14) of two lanes (14a, 14b) adjoining the portion (17) in order to ensure that at least two marking elements (16) can always be read by the sensor apparatus (12).

8. Arrangement as claimed in claim 7, **characterised in that** in each case a row of marking elements (16) is located in the crossing region (14) in the left half and right half, as seen in the direction of the longitudinal extension of both mutually crossing lanes (13a, 13b).

9. Arrangement as claimed in any one of claims 2 to 8, **characterised in that** a second row of spaced-part marking elements (16) is provided which is located such that the gantry lift device (1) can be moved by means of grid navigation along the two rows of marking elements (16), wherein one of the two rows of marking elements (16) can be read by the first part (12a) of the sensor apparatus (12) which has at least one sensor, and the other of the two rows of marking elements (16) can be read by the second part (12b) of the sensor apparatus (12) which has at least one sensor.

10. Arrangement as claimed in claim 9, **characterised in that** the two rows of marking elements (16) are adjoined by two branching rows of spaced-apart marking elements (16) such that the gantry lift device (1) can be moved by means of grid navigation along the branching rows of marking elements (16), wherein one of the two branching rows of marking elements (16) can be read by the first part (12a) of the sensor apparatus (12) and the other of the two branching rows of marking elements (16) can be read by the second part (12b) of the sensor apparatus (12).

## Revendications

1. Ensemble comprenant une unité de levage à portique (1) en forme de cavalier élévateur, destinée à la manutention de conteneurs (8), notamment de conteneurs ISO, l'unité de levage à portique (1) étant conçue pour pouvoir naviguer automatiquement à l'aide d'un système de navigation à grille, et l'unité de levage à portique (1) comportant un dispositif de détection (12) destiné à la navigation de l'unité de levage à portique (1) et un profil de dégagement (15) qui est conçu de telle sorte que l'unité de levage à portique (1) puisse circuler au-dessus d'un conteneur (8) sans collision, et comprenant une rangée d'éléments de marquage espacés (16) destinée au système de navigation à grille, l'unité de levage à portique (1) et la rangée d'éléments de marquage (16) étant disposés l'une par rapport à l'autre de telle sorte que l'unité de levage à portique (1) puisse être déplacée le long de la rangée d'éléments de marquage (16) à l'aide du système de navigation à grille, la rangée d'éléments de marquage (16) pouvant être lue par le dispositif de détection (12) de l'unité de levage à portique (1), **caractérisé en ce que** le dispositif de détection (12a, 12b) est disposé sur l'unité de levage à portique (1) dans une position de fonctionnement à l'extérieur du profil de dégagement (15) afin de lire la rangée d'éléments de marquage (16) pour permettre la navigation de l'unité de levage à portique (1) en position de fonctionnement, la rangée d'éléments de marquage (16) étant disposée à côté du profil de dégagement (15) de l'unité de levage à portique (1) et au-dessous d'un support de mécanisme de roulement (2) de l'unité de levage à portique (1).

2. Ensemble selon la revendication 1, **caractérisé en ce que** le dispositif de détection (12) comprend une première partie (12a) pourvue d'un capteur et une deuxième partie (12b) pourvue d'un capteur.

3. Ensemble selon la revendication 2, **caractérisé en ce que** la rangée d'éléments de marquage (16) est disposée par rapport à l'unité de levage à portique (1) et notamment au-dessous d'un de ses supports de mécanisme de roulement (2) de manière à ce que la rangée d'éléments de marquage (16) ne peut être lue que par la première partie (12a) du dispositif de détection (12), qui comporte au moins un capteur, ou par la deuxième partie (12b) du dispositif de détection (12) qui comporte au moins un capteur.

4. Ensemble selon la revendication 2 ou 3, **caractérisé en ce que** la rangée d'éléments de marquage (16) est suivie d'une rangée de dérivation d'éléments de marquage espacés (16) de telle sorte que l'unité de levage à portique (1) puisse être déplacée à l'aide d'un système de navigation à grille le long la rangée de dérivation d'éléments de marquage (16), la rangée de dérivation d'éléments de marquage (16) ne pouvant être lue que par la première partie (12a) ou que par la deuxième partie (12b) du dispositif de détection (12) de l'unité de levage à portique (1).

5. Ensemble selon la revendication 4, **caractérisé en ce que**, après que l'unité de levage à portique (1) a tourné, les éléments de marquage (16) sont disposés par rapport à l'unité de levage à portique (1) de telle sorte que la rangée de dérivation des éléments de marquage (16) puisse être lue par la même partie (12a, 12b) ou par une autre partie du dispositif de détection (12) qu'avant de tourner.

6. Ensemble selon l'une des revendications précédentes, **caractérisé en ce qu'**un couloir (13a, 13b) est prévu pour l'unité de levage à portique (1), auquel est associée la rangée d'éléments de marquage (16) de sorte que, au moins dans une portion (17) de la voie de roulement, la rangée d'éléments de marquage (16), vue dans la direction d'extension longitudinale de la voie de roulement (13a, 13b), est disposée uniquement dans la moitié gauche ou uniquement dans la moitié droite et, en particulier dans la portion (17) de la voie de roulement (13a, 13b), aucun élément de marquage (16) n'est disposé dans la moitié droite ou gauche.

7. Ensemble selon la revendication 6, **caractérisé en ce que** dans une zone d'intersection (14) de deux voies de roulement (14a, 14b), qui fait suite à la portion (17), des éléments de marquage supplémentaires (16) sont prévus afin d'assurer qu'au moins deux éléments de marquage (16) peuvent être lus par le dispositif de détection (12).

8. Ensemble selon la revendication 7, **caractérisé en ce que** dans la zone d'intersection (14) dans la direction d'extension longitudinale des deux voies de roulement (13a, 13b) qui se croisent, une rangée d'éléments de marquage (16) est disposée dans les moitiés gauche et droite.

9. Ensemble selon l'une des revendications 2 à 8, **caractérisé en ce qu'**une deuxième rangée d'éléments de marquage espacés (16) est prévue, qui est disposée de manière à ce que l'unité de levage à portique (1) puisse être déplacée le long des deux rangées d'éléments de marquage (16) à l'aide du système de navigation à grille, l'une des deux rangées d'éléments de marquage (16) pouvant être lue par la première partie (12a) du dispositif de détection (12) qui comporte au moins un capteur, et l'autre des deux rangées d'éléments de marquage (16) pouvant être lue par la deuxième partie (12b) du dispositif de détection (12) qui comporte au moins un capteur.

10. Ensemble selon la revendication 9, **caractérisé en ce que** les deux rangées d'éléments de marquage (16) sont suivies de deux rangées de dérivation d'éléments de marquage espacés (16) de telle sorte que l'unité de levage à portique (1) puisse être déplacée à l'aide d'un système de navigation à grille le long de la rangée de dérivation d'éléments de marquage (16), l'une des deux rangées de dérivation d'éléments de marquage (16) pouvant être lue par la première partie (12a) du dispositif de détection (12) et l'autre des deux rangées de dérivation d'éléments de marquage (16) pouvant être lue par la deuxième partie (12b) du dispositif de détection (12).
